# EUROPEAN PATENT SPECIFICATION

(11) **EP 4 361 042 B1**
(45) Date of publication and mention of the grant of the patent: **21.10.2026**
(21) Application number: 23207176.1
(22) Date of filing: 31.10.2023
(51) Int. Cl.: B64D 33/02, F02C 7/05

(54) **SYSTEMS AND METHODS FOR CONTROLLING AN AIR FLOW RATE FOR A PROPULSION SYSTEM AIR INTAKE**
SYSTEME UND VERFAHREN ZUR STEUERUNG EINER LUFTDURCHFLUSSMENGE FÜR DEN LUFTEINLASS EINES ANTRIEBSSYSTEMS
SYSTÈMES ET PROCÉDÉS DE COMMANDE D'UN DÉBIT D'AIR POUR UNE ADMISSION D'AIR DE SYSTÈME DE PROPULSION

(30) Priority: 31.10.2022 US 202217977680
(43) Date of publication of application: 01.05.2024
(73) Proprietor: PRATT & WHITNEY CANADA CORP., Longueuil, Québec J4G 1A1 (CA)
(72) Inventor: AKCAYOZ, Eray, (01BE5) Longueuil, J4G 1A1 (CA); CUNNINGHAM, Mark, (01BE5) Longueuil, J4G 1A1 (CA); RAMAMURTHY, Raja, (01BE5) Longueuil, J4G 1A1 (CA); MARRANO, Roberto, (01BE5) Longueuil, J4G 1A1 (CA)
(74) Representative: Dehns

(56) References cited:
- FR-A1- 3 109 408
- US-A- 4 397 431
- US-A1- 2009 139 398
- US-A1- 2019 226 403

## Description

### TECHNICAL FIELD

This disclosure relates generally to air intakes for aircraft propulsion systems and, more particularly, to systems and methods for controlling a bypass flow rate for an air intake.

### BACKGROUND OF THE ART

Some propulsion systems for aircraft may include an air intake configured to separate foreign matter (e.g., dust, debris, ice, etc.) entering the air intake from air which is supplied to an engine of the propulsion system. Various systems and methods are known in the art for controlling intake air flow and separating foreign matter from intake air. While these known systems and methods have various advantages, there is still room in the art for improvement.

FR 3109408 A1, US 2009/139398 A1, US 4397431 A and US 2019/226403 A1 disclose prior art systems.

### SUMMARY

According to an aspect of the present invention, an aircraft propulsion is provided according to claim 1.

According to another aspect of the present invention, a method for controlling an air flow rate for an air intake for an aircraft propulsion system is provided according to claim 9.

Features of embodiments of the invention are set forth in the dependent claims.

The present disclosure, and all its aspects, embodiments and advantages associated therewith will become more readily apparent in view of the detailed description provided below, including the accompanying drawings.

### DESCRIPTION OF THE DRAWINGS

FIG. 1 illustrates a perspective view of a propulsion system for an aircraft, in accordance with one or more embodiments of the present disclosure.
FIG. 2 illustrates a schematic view of the propulsion system of FIG. 1, in accordance with one or more embodiments of the present disclosure.
FIG. 3 illustrates a side, cutaway view of a portion of an air intake, in accordance with one or more embodiments of the present disclosure.
FIG. 4 illustrates a cutaway view of a flow control device for the air intake of FIG. 3, in accordance with one or more embodiments of the present disclosure.
FIG. 5 illustrates another cutaway view of the flow control device for the air intake of FIG. 3, in accordance with one or more embodiments of the present disclosure.
FIG. 6 illustrates a block diagram of a method for controlling a bypass flow rate for an air intake of an aircraft propulsion system, in accordance with one or more embodiments of the present disclosure.

### DETAILED DESCRIPTION

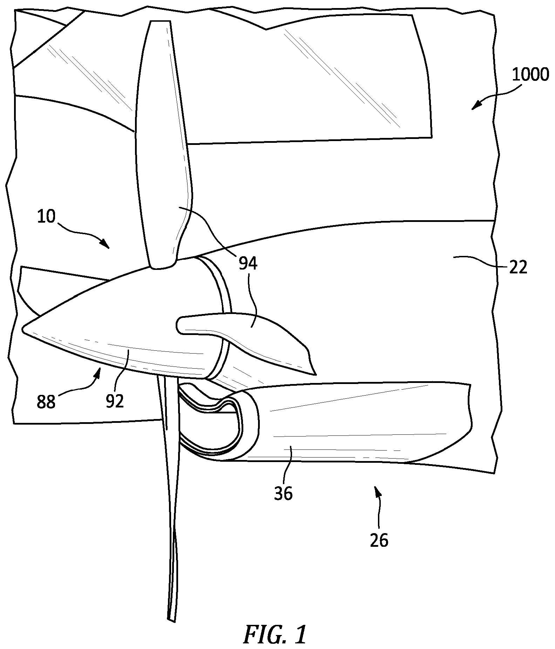

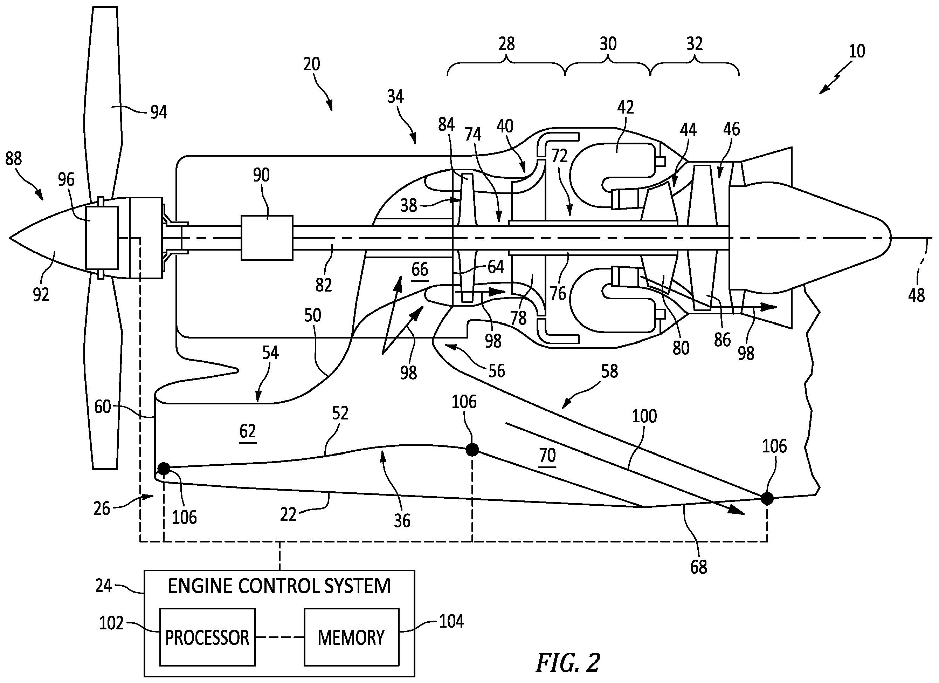

FIGS. 1 and 2 illustrate a propulsion system 10 for an aircraft 1000. The aircraft propulsion system 10 includes a gas turbine engine 20, a nacelle 22 (e.g., an aircraft propulsion system housing), and an engine control system 24. The propulsion system 10 (e.g., the nacelle 22) may be mounted to or otherwise formed by a portion of the aircraft 1000 such as, but not limited to, a wing or fuselage of the aircraft 1000.

The gas turbine engine 20 of FIGS. 1 and 2 is configured as a turboprop engine. However, the present disclosure is not limited to any particular configuration of gas turbine engine for the propulsion assembly 10, and examples of gas turbine engine configurations for the propulsion system 10 may include, but are not limited to, a turbofan engine, a turbojet engine, a propfan engine, or the like. The gas turbine engine 20 of FIGS. 1 and 2, for example, includes an air inlet section 26, a compressor section 28, a combustor section 30, a turbine section 32, and an engine static structure 34. The air inlet section includes an air intake 36. The compressor section 28 may include a low-pressure compressor (LPC) 38 and a high-pressure compressor (HPC) 40. The combustor section 28 includes an annular combustor 42. The turbine section 32 may include a high-pressure turbine (HPT) 44 and a low-pressure turbine (LPT) 46.

The gas turbine engine 20 sections 28, 30, and 32 of FIG. 2 are arranged sequentially along an axial centerline 48 (e.g., a rotational axis) of the propulsion system 10. The engine static structure 34 may include, for example, one or more engine cases for the gas turbine engine 20. The engine static structure 34 may additionally include cowlings, bearing assemblies, or other structural components of the gas turbine engine 20. The one or more engine cases house and/or structurally support one or more of the engine sections 26, 28, 30, and 32. The engine sections 28, 30, and 32 may be collectively referred to as an "engine core" of the gas turbine engine 20.

The air intake 36 is configured to direct a flow of ambient air into the engine core of the gas turbine engine 20. The air intake 36 of FIGS. 1 and 2 includes an intake body 50. The intake body 50 includes an interior surface 52 forming a series of air passages through the air intake 36. The intake body 50 forms an air inlet duct 54, a core flow duct 56, and a bypass flow duct 58. Each of the air inlet duct 54, the core flow duct 56, and the bypass flow duct 58 include portions of the interior surface 52. For clarity, the air intake 36 of FIG. 2 may be understood to have an exaggerated size relative to other components of the propulsion system 10. The present disclosure, however, is not limited to any particular size of the air intake 36.

The air inlet duct 54 includes an intake inlet 60 of the air intake 36. The intake inlet 60 forms an opening at (e.g., on, adjacent, or proximate) an upstream end of the air intake 36. The air inlet duct 54 may be disposed outside of the gas turbine engine 20 and may be formed by, disposed within, or otherwise in contact with the nacelle 22. The intake inlet 60 of FIGS. 1 and 2 radially offset from the axial centerline 48. For example, the intake inlet 60 (e.g., the entire intake inlet 60) may be radially offset from the axial centerline 48 in a radial direction (e.g., downwardly), as shown in FIGS. 1 and 2. The intake inlet 60 may also be configured with an axial facing orientation. For example, the intake inlet 60 of FIGS. 1 and 2 faces in an axially-forward direction. The present disclosure, however, is not limited to the particular configuration and orientation of the intake inlet of FIGS. 1 and 2. The interior surface 52 of the air inlet duct 54 surrounds and forms an inlet flow passage 62 through the air inlet duct 54. The inlet flow passage 62 extends from the intake inlet 60 to the core flow duct 56 and the bypass flow duct 58.

The core flow duct 56 includes a core outlet 64 of the air intake 36. The core outlet 64 forms an opening at (e.g., on, adjacent, or proximate) a downstream end of the air intake 36. The core outlet 64 is disposed at (e.g., on, adjacent, or proximate) the compressor section 28 to direct ambient air entering the air intake 36 into the compressor section 28. For example, the core outlet 64 of FIG. 2 is disposed at (e.g., on, adjacent, or proximate) and in fluid communication with an inlet of the low-pressure compressor 38. The interior surface 52 of the core flow duct 56 surrounds and forms a core flow passage 66 through the core flow duct 56. The core flow passage 66 extends from the air inlet duct 54 to the core outlet 64. The core flow duct 56 of FIG. 2 extends in a radially inward direction from the air inlet duct 54 to the core outlet 64. The core outlet 64 and portions of the core flow duct 56 may be configured to form an annular portion of the core flow passage 66 extending circumferentially about (e.g., completely around) the axial centerline 48, as shown in FIG. 2.

The bypass flow duct 58 includes a bypass outlet 68 of the air intake 36. The bypass outlet 68 forms an opening at (e.g., on, adjacent, or proximate) a downstream end of the air intake 36. The bypass duct 58 may be disposed outside of the gas turbine engine 20 and may be formed by, disposed within, or otherwise in contact with the nacelle 22. For example, the bypass outlet 68 may be disposed at (e.g., on, adjacent, or proximate) or otherwise formed through an exterior surface of the nacelle 22 to direct air from the air intake 36 to an exterior of the propulsion system 10. The interior surface 52 of the bypass flow duct 58 surrounds and forms a bypass flow passage 70 through the bypass flow duct 58. The bypass flow passage 70 extends from the air inlet duct 54 to the bypass outlet 68. The bypass flow duct 58 of FIG. 2 extends in an axially aft and a radially outward direction from the air inlet duct 54 to the bypass outlet 68.

The gas turbine engine 20 of FIG. 2 further includes a first rotational assembly 72 (e.g., a high-pressure spool) and a second rotational assembly 74 (e.g., a low-pressure spool). The first rotational assembly 72 and the second rotational assembly 74 are mounted for rotation about the axial centerline 48 relative to the engine static structure 34.

The first rotational assembly 72 includes a first shaft 76, a bladed first compressor rotor 78 for the high-pressure compressor 40, and a bladed first turbine rotor 80 for the high-pressure turbine 44. The first shaft 76 interconnects the bladed first compressor rotor 78 and the bladed first turbine rotor 80. The second rotational assembly 74 includes a second shaft 82, a bladed second compressor rotor 84 for the low-pressure compressor 38, a bladed second turbine rotor 86 for the low-pressure turbine 46, and a propeller 88. The second shaft 82 interconnects the bladed second compressor rotor 84 and the bladed second turbine rotor 86. The second shaft 82 may be connected to the propeller 88 by one or more speed-reducing gear assemblies 90 to drive the propeller 88 at a reduced rotational speed relative to the second shaft 82. Alternatively, the second shaft 82 may directly interconnect the propeller 88 with the bladed second compressor rotor 84 and the bladed second turbine rotor 86. The combustor 42 of FIG. 2 is disposed between the bladed first compressor rotor 78 and the bladed first turbine rotor 80 along the axial centerline 48.

The propeller 88 of FIGS. 1 and 2 includes a hub 92 and a plurality of propeller blades 94. The propeller blades 94 are mounted to the hub 92. The propeller blades 94 of FIGS. 1 and 2 are circumferentially distributed about the hub 92 relative to the axial centerline 48. However, it should be understood that the propeller 88 may be configured for rotation about a rotational axis which is different than the axial centerline 48 and, therefore, the propeller blades 94 may be circumferentially distributed about this different rotational axis. The propeller blades 94 extend radially outward from the hub 92. As shown in FIGS. 1 and 2, the propeller blades 94 may extend radially outward from the hub 92 such that the propeller blades 94 radially overlap all or a portion of the intake inlet 60. The propeller blades 94 may be additionally or alternatively be disposed axially forward of the intake inlet 60. In some embodiments, each of the propeller blades 94 may be configured to rotate about a lengthwise axis of the propeller blade 94 to vary a pitch of the propeller blade 94. For example, as shown in FIG. 2, the propulsion assembly 10 or its propeller 88 may include an actuation system 96 configured to effect rotation of the propeller blades 94. The actuation system 96 may be configured as a mechanical actuation system, an electromechanical actuation system, a hydraulic actuation system, a pneumatic actuation system, or another other suitable configuration for effecting rotation of the propeller blades 94.

The nacelle 22 houses the gas turbine engine 20 and forms and aerodynamic cover for the propulsion system 10. The nacelle 22 may extend circumferentially about (e.g., completely around) the axial centerline 48. The nacelle 22 may surround and/or support portions of the air intake 36.

During operation of the propulsion system 10 of FIGS. 1 and 2, ambient air enters the propulsion system 10 through the air intake 36 and is directed into a core flow path 98 through core flow passage 66 and a bypass flow path 100 through the bypass flow passage 70. The core flow path 98 extends axially from the core outlet 64 along the axial centerline 48 within the gas turbine engine 20. More particularly, the core flow path 98 extends axially through the gas turbine engine 20 sections 28, 30, 32 of FIG. 2. The air within the core flow path 98 may be referred to as "core air." The core air is compressed by the bladed second compressor rotor 84 and the bladed first compressor rotor 78 and directed into a combustion chamber of the combustor 42. Fuel is injected into the combustion chamber and mixed with the compressed core air to provide a fuel-air mixture. This fuel-air mixture is ignited and combustion products thereof, which may be referred to as "core combustion gas," flow through and sequentially cause the bladed first turbine rotor 80 and the bladed second turbine rotor 86 to rotate. The rotation of the bladed first turbine rotor 80 and the bladed second turbine rotor 86 respectively drive rotation of the first rotational assembly 72 and the second rotational assembly 74. Rotation of the second rotational assembly 74 further drives rotation of the propeller 88 to provide propulsion (e.g., thrust) for the aircraft 1000. Rotation of the propeller 88 in proximity to the intake inlet 60 may induce a circumferential component to a flow direction of the ambient air entering the intake inlet 60, which influence may be referred to as "propeller wash" or "prop wash." The bypass flow path 100 extends through the bypass flow passage 70 from the air inlet duct 54 to the bypass outlet 68. The air within the bypass flow path 100 may be referred to as "bypass air."

The engine control system 24 of FIG. 2 includes a processor 102 and memory 104. The memory 104 is in signal communication with the processor 102. The processor 102 may include any type of computing device, computational circuit, or any type of process or processing circuit capable of executing a series of instructions that are stored in the memory 104, thereby causing the processor 102 to perform or control one or more steps or other processes. The processor 102 may include multiple processors and/or multicore CPUs and may include any type of processor, such as a microprocessor, digital signal processor, co-processors, a micro-controller, a microcomputer, a central processing unit, a field programmable gate array, a programmable logic device, a state machine, logic circuitry, analog circuitry, digital circuitry, etc., and any combination thereof. The instructions stored in memory 104 may represent one or more algorithms for controlling aspects of the propulsion system 10, and the stored instructions are not limited to any particular form (e.g., program files, system data, buffers, drivers, utilities, system programs, etc.) provided they can be executed by the processor 102. The memory 104 may be a non-transitory computer readable storage medium configured to store instructions that when executed by one or more processors, cause the one or more processors to perform or cause the performance of certain functions. The memory 104 may be a single memory device or a plurality of memory devices. A memory device may include a storage area network, network attached storage, as well a disk drive, a read-only memory, random access memory, volatile memory, nonvolatile memory, static memory, dynamic memory, flash memory, cache memory, and/or any device that stores digital information. One skilled in the art will appreciate, based on a review of this disclosure, that the implementation of the engine control system 24 may be achieved via the use of hardware, software, firmware, or any combination thereof. The engine control system 24 may also include input and output devices (e.g., keyboards, buttons, switches, touch screens, video monitors, sensor readouts, data ports, etc.) that enable the operator to input instructions, receive data, etc. The engine control system 24 may be located within the propulsion system 10 or may be located on the aircraft 1000 (see FIG. 1) on which the propulsion system 10 is installed.

The engine control system 24 may form or otherwise be part of an electronic engine controller (EEC) for the propulsion system 10. The EEC may control operating parameters of the gas turbine engine 20 including, but not limited to, fuel flow, stator vane position (e.g., variable compressor inlet guide vane (IGV) position), compressor air bleed valve position, propeller blade 94 pitch, bypass air flow ratio, etc. so as to control an engine power and/or thrust of the gas turbine engine 20. In some embodiments, the EEC may be part of a full authority digital engine control (FADEC) system for the propulsion system 10.

The engine control system 24 may be configured to receive data associated with operation of the gas turbine engine 20, the propulsion system 10, and/or the aircraft 1000. The data may include operational parameters (e.g., pressure, temperature, fuel flow, rotation speed, shaft torque, etc.) for the gas turbine engine 20. The engine control system 24 may be configured to measure or otherwise obtain operational parameters for the propeller 88 such as, but not limited to, propeller 88 rotation speed and/or pitch positions of the propeller blades 94. For example, the engine control system 24 may be in communication (e.g., signal communication) with the actuation system 96 to receive one or more operational parameters for the propeller 88. The data may include the status of anti-icing systems for the propulsion system 10 and/or the aircraft 1000. The engine control system 24 may include and be in communication (e.g., signal communication) with one or more sensors 106 distributed throughout the gas turbine engine 20. The sensors 106 may include, but are not limited to, one or more of the following exemplary sensors: an air intake pressure sensor, an air intake flow sensor, an air intake temperature sensor, an icing detection sensor, and the like. The sensors 106 may be disposed at one or more locations at (e.g., on, adjacent, or proximate) or within the air intake 36. Additional or alternative sensors 106 (e.g., air speed sensors, air pressure sensors, air temperature sensors, etc.) may be disposed at other locations of the aircraft 1000 or its propulsion system 10. The sensors 106 may be used, for example, to determine or otherwise identify operational conditions of the air intake 36 such as icing conditions, air flow conditions (e.g., core air flow, bypass air flow, etc.), and the like.

During operation of the propulsion system 10, foreign matter such as, but not limited to, water, ice particles, sand, hail, and other debris may enter the air intake 36 with the ambient air. Additionally, ice may form or otherwise accumulate on surfaces of the intake body 50, such as the interior surface 52, and may subsequently be dislodged and carried by air flowing through the air intake 36. If ingested into the engine core, this foreign matter could cause damage to the gas turbine engine 20. The configuration of the air intake 36 may facilitate inertial separation of foreign matter entering the air intake 36 to prevent the foreign matter from being directed into the engine core. For example, foreign matter entering the intake inlet 60 may be unable to be carried by air flow into the core flow passage 66 (e.g., the foreign matter may be unable to make the turn into the core flow passage 66) and the foreign matter may instead be directed into the bypass flow passage 70 and exhausted from the propulsion assembly 10. However, air flow through the bypass flow passage 70 along the bypass flow path 100 may cause a reduction in performance of the air intake 36, resulting in reduced efficiency in the operation of the gas turbine engine 20.

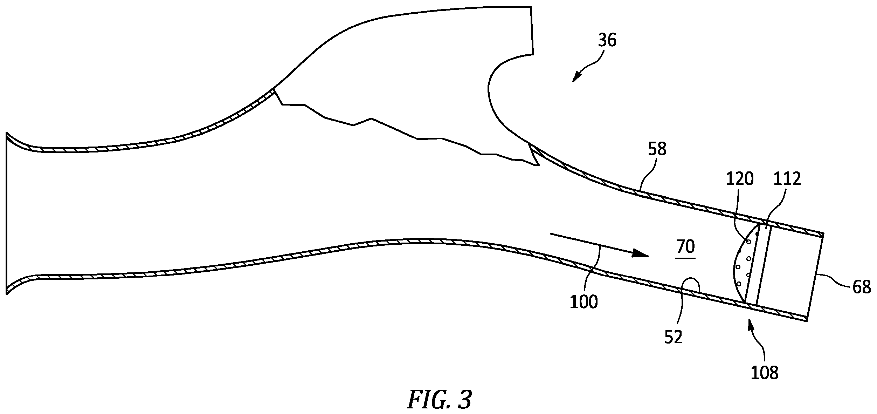

Referring to FIGS. 3-5, the air intake 36 includes a flow control device 108. The flow control device 108 is disposed within the bypass flow duct 58. The flow control device 108 is configured to control an area of a cross-sectional flow area 110 of the bypass flow passage 70, thereby controlling a flow rate of the bypass air flow along the bypass flow path 100. For example, the flow control device 108 is configured to control the area of the cross-sectional flow area 110 to control a flow rate of the bypass air relative to the core air flow rate. It should be understood that the flow control device 108 of the present disclosure is not limited to the particular flow control device 108 configuration illustrated in FIGS. 3-5 provided the flow control device 108 (e.g., vanes, doors, ejectors, etc.) is configured to control the area of the cross-sectional flow area 110 of the bypass flow passage 70.

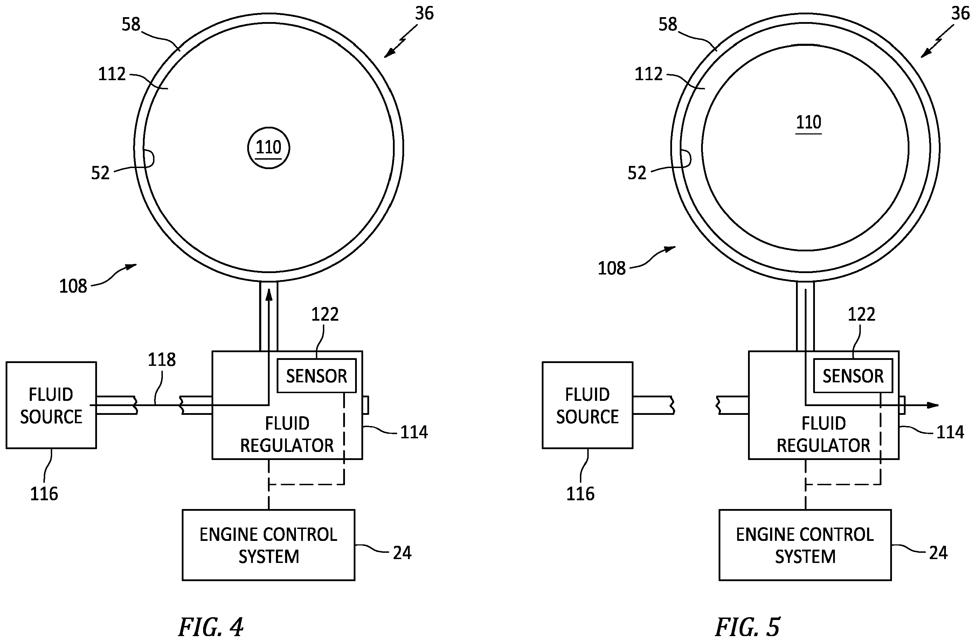

The flow control device 108 of FIGS. 3-5 includes an inflatable boot 112 and a fluid regulator 114. The inflatable boot 112 is mounted to or otherwise positioned on the interior surface 52. The inflatable boot 112 may have an annular configuration as shown, for example, in FIGS. 4 and 5. The inflatable boot 112 may be mounted to or otherwise positioned on the interior surface 52 about (e.g., completely around) an interior perimeter of the bypass flow duct 58. While the inflatable boot 112 is illustrated with a circular configuration in FIGS. 4 and 5, it should be understood that the inflatable boot 112 may have any shape which corresponds to a shape (e.g., a cross-sectional shape) of the bypass flow duct 58. Accordingly, the inflatable boot 112 may circumscribe the cross-sectional flow area 110. The inflatable boot 112 may be positioned at (e.g., on, adjacent, or proximate) the bypass outlet 68. However, the present disclosure is not limited to any particular location of the inflatable boot 112 within the bypass flow duct 58. The inflatable boot 112 may be formed by or may otherwise include a flexible material such as, but not limited to, rubber and/or another suitable elastomeric material.

The fluid regulator 114 is in fluid communication (e.g., using one or more suitable conduits) with the inflatable boot 112. The fluid regulator 114 is configured to direct a fluid into the inflatable boot 112 to increase a size of (e.g., inflate) the inflatable boot 112. Similarly, the fluid regulator 114 is configured to direct a fluid out of the inflatable boot 112 to decrease a size of (e.g., deflate) the inflatable boot 112. FIG. 4 illustrates the inflatable boot 112 in an inflated position. FIG. 5 illustrates the inflatable boot 112 in a deflated position. The fluid regulator 114 may include one or more components such as, but not limited to, flow control valves (e.g., spring-loaded control valves), pressure-relief valves, fluid vents, and the like so as to direct and control a supply of fluid to or from the inflatable boot 112. The present disclosure, however, is not limited to any particular configuration of the fluid regulator 114. The fluid regulator 114 is in fluid communication (e.g., using one or more suitable conduits) with a pressurized fluid source 116. The fluid regulator 114 configured to receive a pressurized fluid 118 from the pressurized fluid source 116. The pressurized fluid source 116 may include, for example, one of the low-pressure compressor 38 or the high-pressure compressor 40 (see FIG. 2). For example, the low-pressure compressor 38 or the high-pressure compressor 40 may be configured to supply pressurized bleed air (e.g., from an intermediate stage or compressor outlet) to the fluid regulator 114. The fluid regulator 114 may include a pressure sensor 122 configured to measure a pressure of the fluid in or supplied to the inflatable boot 112. The fluid regulator 114 and/or its pressure sensor 122 may be in communication (e.g., signal communication) with the engine control system 24. The inflatable boot 112 may be selectively positionable by the fluid regulator 114 in a fully inflated position, a fully deflated position, and a plurality of inflated positions between the fully inflated position and the fully deflated position.

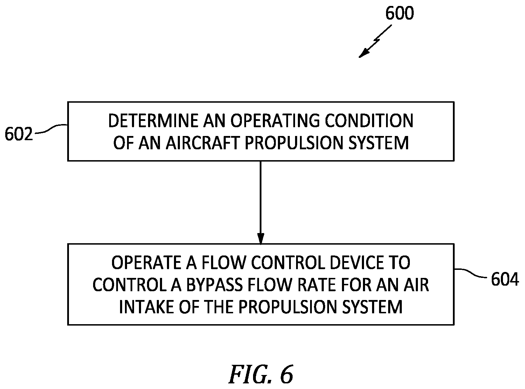

Referring to FIGS. 2-6, a Method 600 for controlling a bypass flow rate for an air intake of an aircraft propulsion system is provided. FIG. 6 illustrates a flowchart for the Method 600. The Method 600 may be performed for the propulsion system 10 and its air intake 36, as described herein. The engine control system 24 may be used to execute or control one or more steps of the Method 600. For example, the processor 102 may execute instructions stored in memory 104, thereby causing the engine control system 24 and/or its processor 102 to execute or otherwise control one or more steps of the Method 600. However, while the Method 600 may be described herein with respect to the propulsion system 10, the air intake 36, and the engine control system 24, the present disclosure Method 600 is not limited to use with the propulsion system 10, the air intake 36, and the engine control system 24 described herein. Unless otherwise noted herein, it should be understood that the steps of Method 600 are not required to be performed in the specific sequence in which they are discussed below and, in some embodiments, the steps of Method 600 may be performed separately or simultaneously.

In Step 602, an operating condition of the propulsion system 10 is determined or otherwise obtained by the engine control system 24. For example, the engine control system 24 may determine that an icing condition exists for the propulsion system 10. An icing condition for the propulsion system 10 may represent an increased likelihood of ice ingestion into the air intake 36 and/or ice formation on surfaces (e.g., the interior surface 52) of the air intake 36. An icing condition for the propulsion system 10 may be a function of the atmospheric state (e.g., ambient air temperature, altitude, ambient air pressure, etc.) and/or an operational state (e.g., cruise, takeoff, landing, etc.) for the propulsion system 10. The atmospheric state and/or the operational state for the propulsion system 10 may be determining using, for example, sensor data from the sensors 106 and/or other sensor data and operational parameters of the aircraft 1000 (see FIG. 1) or its propulsion system 10. For example, during a cruising operational state of the propulsion system 10, the likelihood of ice ingestion or ice formation may be relatively low for the air intake 36. During a takeoff or a landing operational state of the propulsion system 10, the likelihood of ice ingestion or ice formation may be relatively higher (e.g., in comparison to a cruising operational state). The engine control system 24 may determine an icing probability or an icing factor representing the likelihood of an icing condition for the propulsion system 10. The engine control system 24 may identify an icing condition for the propulsion system 10 where the icing probability or icing factor exceeds a threshold value, which threshold value may be a predetermined value a dynamically determined value (e.g., based on the atmospheric state and/or an operational state for the propulsion system 10).

In Step 604, the flow control device 108 may be operated to control the bypass flow rate of bypass air along the bypass flow path 100. In particular, the flow control device 108 may be operated to control the area of the cross-sectional flow area 110. The engine control system 24 may operate or otherwise control the flow control device 108 based on the determined operational condition of the propulsion system 10 (see Step 602). The engine control system 24 may control the fluid regulator 114 to direct the pressurized fluid 116 to the inflatable boot 112 to inflate the inflatable boot 112, thereby increasing a size of the inflatable boot 112 and decreasing the area of the cross-sectional flow area 110. For example, the engine control system 24 may control the fluid regulator 114 to increase a fluid pressure of the inflatable boot 112 (e.g., as measured by the pressure sensor 122) to a predetermined pressure value, which predetermined pressure value may correspond to a selected inflation position for the inflatable boot 112. The engine control system 24 may control the fluid regulator 114 to direct the pressurized fluid 116 out of the inflatable boot 112 to deflate the inflatable boot 112, thereby decreasing a size of the inflatable boot 112 and increasing the area of the cross-sectional flow area 110. The engine control system 24 may, therefore, control the fluid regulator 114 to selectively position the inflatable boot 112 in a fully inflated position, a fully deflated position, and a plurality of intermediate inflation positions. A fully inflated position of the inflatable boot 112 may form a substantially closed or fully closed condition of the cross-sectional flow area 110. For example, a first area of the cross-sectional flow area 110 with the inflatable boot 112 in the fully inflated position may be less than five percent (5%) of a second area of the cross-sectional flow area 110 with the inflatable boot 112 in the fully deflated position. For further example, the inflatable boot 112 in the fully inflated position may provide a bypass air flow ratio of approximately zero percent (0%) to approximately ten percent (10%).

The engine control system 24 may operate or otherwise control a position of the flow control device 108 by determining an open loop target position of the flow control device 108 based, for example, on a measured differential pressure across the flow control device 108 (e.g., using the sensors 106). For example, a target position of the inflatable boot 112 may indicate a percentage open value or a percentage closed value relative to the fully deflated and/or fully inflated positions. Alternatively, the engine control system 24 may operate or otherwise control a position of the flow control device 108 by determining closed loop target position of the flow control device 108 to effect a predetermined bypass ratio for the air intake 36.

The engine control system 24 may control the flow control device 108 to facilitate improved air intake 36 performance and separation of foreign matter. During non-icing conditions of the propulsion assembly 10 and/or when the likelihood of foreign matter ingestion into the air intake may be low, the engine control system 24 may control the fluid regulator 114 to inflate the inflatable boot 112. In this partially or fully inflated position, the inflatable boot 112 may reduce or prevent the flow of bypass air along the bypass flow path 100, thereby increasing the amount (e.g., a ratio of the total air flow into the air intake 36) of ambient air entering the air intake 36 which is directed into the engine core along the core flow path 98. The engine control system 24 may control a size and/or position of the inflatable boot 112 to control a bypass air flow ratio for the air intake 36. In this partially or fully inflated position of the inflatable boot 112, the inflatable boot 112 may still accommodate separation of foreign matter. For example, relatively large foreign matter may be directed into the bypass flow duct 58 and the impact energy of the foreign matter may deflate or momentarily deform the inflatable boot 112 allowing the relatively large foreign matter to be directed through the inflatable boot 112 and exhausted from the propulsion system 10 through the bypass outlet 68. During icing conditions of the propulsion assembly 10 and/or when the likelihood of foreign matter ingestion into the air intake may be relatively high, the engine control system 24 may control the fluid regulator 114 to deflate the inflatable boot 112. In this partially inflated or fully deflated position, the inflatable boot 112 may facilitate an increase in the flow of bypass air along the bypass flow path 100, thereby facilitating the separation of any ingested foreign matter into the bypass flow duct 58 and away from the core flow duct 56.

During operation of the propulsion system 10, foreign matter (illustrated as foreign matter 120 in FIG. 3) may become deposited or otherwise accumulate on the inflatable boot 112. The inflatable boot 112 may be repositioned (e.g., cycled) between a first inflated position and a second inflated position to break up the accumulated foreign matter and allow the foreign matter to be exhausted from the bypass duct. For example, the engine control system 24 may control the fluid regulator 114 to perform a series of deflation and inflation cycles for the inflatable boot 112 to facilitate the removal and exhaust of ice and/or other foreign matter from the air intake 36 and its inflatable boot 112. One or more deflation and inflation cycles for the inflatable boot 112 may be initiated by an operator (e.g., a pilot) of the aircraft 1000 (see FIG. 1). Additionally or alternatively, one or more deflation and inflation cycles for the inflatable boot 112 may be initiated by the engine control system 24. For example, the engine control system 24 may initiate one or more deflation and inflation cycles based on an identification of foreign matter accumulation on the inflatable boot 112 and/or within the bypass flow duct 58. Identification of foreign matter accumulation may be determined, for example, based on a measured differential pressure across the inflatable boot 112, a measured flow rate through the bypass flow duct 58, ice or fluid detection within the bypass flow duct 58, and/or other measured operational parameters for the air intake 36. The measured operational parameters may be compared to one or more predetermined or dynamically determined threshold values to identify the presence and/or severity of accumulated foreign matter in the bypass flow duct 58. The engine control system 24 may also initiate one or more deflation and inflation cycles at a selected periodicity based on the determined operating condition of the propulsion system 10. For example, during a cruising operational condition of the propulsion assembly 10 (e.g., when the risk associated with foreign matter ingestion is relatively low), the engine control system 24 may generally maintain the inflatable boot 112 in the fully inflated position to facilitate improved air intake 36 efficiency, and the engine control system 24 may periodically initiate one or more deflation and inflation cycles to remove any accumulated foreign matter from the bypass flow duct 58.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. It is further noted that various method or process steps for embodiments of the present disclosure are described in the following description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present invention have been disclosed, it will be apparent to those of ordinary skill in the art that many more embodiments and implementations are possible within the scope of the present invention as defined in the appended claims. For example, the present invention as described herein includes several aspects and embodiments that include particular features. Although these particular features may be described individually, it is within the scope of the present invention that some or all of these features may be combined with any one of the aspects, provided that these combinations remain within the scope of the claims. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Accordingly, the present invention is not to be restricted otherwise than by the wording of the attached claims.

## Claims

1. A propulsion system (10) for an aircraft (1000), the propulsion system (10) comprising:
a gas turbine engine (20) forming a core flow path (98); and
an air intake (36), the air intake (36) comprising:
an air inlet duct (54), the air inlet duct (54) including an intake inlet (60) of the air intake (36);
a core flow duct (56), the core flow duct (56) including a core flow outlet (68), the core flow duct (56) extending between and to the air inlet duct (54) and the core flow outlet (68), and the core flow duct (56) configured to direct air from the air inlet duct (54) to the core flow path (98) through the core flow outlet (68);
a bypass flow duct (58), the bypass flow duct (58) including a bypass flow outlet (68), the bypass flow duct (58) extending between and to the air inlet duct (54) and the bypass flow outlet (68), the bypass flow duct (58) including an interior surface (52) forming and surrounding a bypass flow passage (70) through the bypass flow duct (58); and
a flow control device (108) disposed on the interior surface (52), the flow control device (108) configured to variably control an area of a cross-sectional flow area (110) of the bypass flow passage (70);
wherein the flow control device (108) circumscribes the cross-sectional flow area (110),
wherein the flow control device (108) includes an inflatable boot (112) and a fluid regulator (114), the inflatable boot (112) disposed within the bypass flow passage (70), the fluid regulator (114) in fluid communication with the inflatable boot (112), the fluid regulator (114) configured to selectively position the inflatable boot (112) in a fully inflated position, a fully deflated position, and a plurality of intermediate inflation positions between the fully inflated position and the fully deflated position to control the area of a cross-sectional flow area (110) of the bypass flow passage (70), and
wherein the propulsion system (10) further comprises an engine control system (24), the engine control system (24) in signal communication with the fluid regulator (114), the engine control system (24) including a processor (102) in communication with a non-transitory memory (104) storing instructions, which instructions when executed by the processor (102), cause the processor (102) to:
determine an operating condition of the propulsion system (10); and
control the fluid regulator (114) to selectively position the inflatable boot (112) to control the area of a cross-sectional flow area (110) of the bypass flow passage (70) based on the determined operating condition;
**characterised in that**:
the instructions, when executed by the processor (102), further cause the processor (102) to control the fluid regulator (114) to cycle the inflatable boot (112) between a first inflated position and a second inflated position to remove accumulated foreign matter (120) from the inflatable boot (112).

2. The propulsion system (10) of claim 1, wherein the inflatable boot (112) is disposed on the interior surface (52).

3. The propulsion system (10) of claim 1 or 2, wherein a first area of the cross-sectional flow area (110) with the inflatable boot (112) in the fully inflated position is less than five percent of a second area of the cross-sectional flow area (110) with the inflatable boot (112) in the fully deflated position.

4. The propulsion system (10) of claim 1, 2 or 3, wherein the fluid regulator (114) is configured to be in fluid communication with a pressurized fluid source (116), the fluid regulator (114) configured to direct a pressurized fluid (118) from the pressurized fluid source (116) to the inflatable boot (112) to selectively position the inflatable boot (112).

5. The propulsion system (10) of any preceding claim, wherein the inflatable boot (112) is disposed at the bypass flow outlet (68).

6. The propulsion system (10) of any preceding claim, wherein the gas turbine engine (20) includes a compressor (38, 40) forming the core flow path (98), the fluid regulator (114) in fluid communication with the compressor (38, 40), the fluid regulator (114) configured to receive a pressurized fluid (118) from the compressor (38, 40) and direct the pressurized fluid (118) to the inflatable boot (112).

7. The propulsion system (10) of any preceding claim, wherein the instructions, when executed by the processor (102), further cause the processor (102) to:
control the fluid regulator (114) to cycle the inflatable boot (112) at a selected periodicity based on the determined operating condition.

8. The propulsion system (10) of any preceding claim, wherein the instructions, when executed by the processor (102), further cause the processor (102) to:
identify foreign matter (120) accumulation on the inflatable boot (112), and control the fluid regulator (114) to cycle the inflatable boot (112) based on the identification of foreign matter accumulation.

9. A method for controlling an air flow rate for an air intake (36) for an aircraft propulsion system (10), the method comprising:
determining an operating condition of the aircraft propulsion system (10), the air intake (36) of the aircraft propulsion system (10) including a core flow duct (56) and a bypass flow duct (58); and
controlling a first air flow rate for the bypass flow duct (58) and a second air flow rate for the core flow duct (56) by controlling a flow control device (108) to selectively vary an area of a cross-sectional flow area (110) of a bypass flow passage (70) of the bypass flow duct (58) based on the determined operating condition;
wherein the flow control device (108) circumscribes the cross-sectional flow area (110),
and
wherein controlling the flow control device (108) includes selectively positioning an inflatable boot (112) disposed in the bypass flow duct (58), the inflatable boot (112) selectively positionable in a fully inflated position, a fully deflated position, and a plurality of intermediate inflation positions between the fully inflated position and the fully deflated position, wherein, optionally, selectively positioning the inflatable boot (112) includes directing a pressurized fluid (118) to the inflatable boot (112) to inflate the inflatable boot (112);
**characterised in that** the method further comprises:
cycling the inflatable boot (112) between a first inflated position and a second inflated position to remove accumulated foreign matter (120) from the inflatable boot (112).

10. The method of claim 9, wherein:
the determined operational condition is a cruising condition of the aircraft propulsion system (10) and controlling the flow control device (108) includes selectively positioning the inflatable boot (112) in an inflated position based on the cruising condition.

11. The method of claim 9, wherein:
the determined operational condition is an icing condition of the aircraft propulsion system (10) and controlling the flow control device (108) includes selectively positioning the inflatable boot (112) in the fully deflated position based on the icing condition.

## Patentansprüche

1. Antriebssystem (10) für ein Luftfahrzeug (1000), wobei das Antriebssystem (10) umfasst:
ein Gasturbinentriebwerk (20), das einen Kernströmungsweg (98) bildet; und
einen Lufteinlass (36), wobei der Lufteinlass (36) umfasst:
einen Lufteinlasskanal (54), wobei der Lufteinlasskanal (54) einen Einlass (60) des Lufteinlasses (36) beinhaltet;
einen Kernströmungskanal (56), wobei der Kernströmungskanal (56) einen Kernströmungsauslass (68) beinhaltet, wobei sich der Kernströmungskanal (56) zwischen dem Lufteinlasskanal (54) und dem Kernströmungsauslass (68) und bis zu diesen erstreckt, und wobei der Kernströmungskanal (56) dazu konfiguriert ist, Luft von dem Lufteinlasskanal (54) durch den Kernströmungsauslass (68) zu dem Kernströmungsweg (98) zu leiten;
einen Bypassströmungskanal (58), wobei der Bypassströmungskanal (58) einen Bypassströmungsauslass (68) beinhaltet, wobei sich der Bypassströmungskanal (58) zwischen dem Lufteinlasskanal (54) und dem Bypassströmungsauslass (68) und bis zu diesen erstreckt,
wobei der Bypassströmungskanal (58) eine Innenfläche (52) beinhaltet, die einen Bypassströmungsdurchgang (70) durch den Bypassströmungskanal (58) bildet und umgibt; und
eine Strömungssteuervorrichtung (108), die an der Innenfläche (52) angeordnet ist, wobei die Strömungssteuervorrichtung (108) dazu konfiguriert ist, eine Fläche einer Querschnittsströmungsfläche (110) des Bypassströmungsdurchgangs (70) variabel zu steuern;
wobei die Strömungssteuervorrichtung (108) die Querschnittsströmungsfläche (110) umschließt,
wobei die Strömungssteuervorrichtung (108) eine aufblasbare Manschette (112) und einen Fluidregler (114) beinhaltet, wobei die aufblasbare Manschette (112) innerhalb des Bypassströmungsdurchgangs (70) angeordnet ist, wobei der Fluidregler (114) in Fluidverbindung mit der aufblasbaren Manschette (112) steht, wobei der Fluidregler (114) dazu konfiguriert ist, die aufblasbare Manschette (112) selektiv in einer vollständig aufgeblasenen Position, einer vollständig entleerten Position und einer Mehrzahl von Zwischenaufblaspositionen zwischen der vollständig aufgeblasenen Position und der vollständig entleerten Position zu positionieren, um die Fläche einer Querschnittsströmungsfläche (110) des Bypassströmungsdurchgangs (70) zu steuern, und
wobei das Antriebssystem (10) ferner ein Triebwerkssteuersystem (24) umfasst, wobei das Triebwerkssteuersystem (24) in Signalverbindung mit dem Fluidregler (114) steht, wobei das Triebwerkssteuersystem (24) einen Prozessor (102) beinhaltet,
der mit einem nichtflüchtigen Speicher (104) in Verbindung steht, der Anweisungen speichert, wobei die Anweisungen bei Ausführung durch den Prozessor (102) den Prozessor (102) veranlassen:
einen Betriebszustand des Antriebssystems (10) zu bestimmen; und
den Fluidregler (114) zu steuern, um die aufblasbare Manschette (112) selektiv zu positionieren, um die Fläche einer Querschnittsströmungsfläche (110) des Bypassströmungsdurchgangs (70) auf Grundlage des bestimmten Betriebszustands zu steuern;
**dadurch gekennzeichnet, dass**:
die Anweisungen bei Ausführung durch den Prozessor (102) den Prozessor (102) ferner veranlassen, den Fluidregler (114) zu steuern, um die aufblasbare Manschette (112) zwischen einer ersten aufgeblasenen Position und einer zweiten aufgeblasenen Position zyklisch zu verstellen, um angesammelte Fremdkörper (120) von der aufblasbaren Manschette (112) zu entfernen.

2. Antriebssystem (10) nach Anspruch 1, wobei die aufblasbare Manschette (112) an der Innenfläche (52) angeordnet ist.

3. Antriebssystem (10) nach Anspruch 1 oder 2, wobei eine erste Fläche der Querschnittsströmungsfläche (110) bei in der vollständig aufgeblasenen Position befindlicher aufblasbarer Manschette (112) weniger als fünf Prozent einer zweiten Fläche der Querschnittsströmungsfläche (110) bei in der vollständig entleerten Position befindlicher aufblasbarer Manschette (112) beträgt.

4. Antriebssystem (10) nach Anspruch 1, 2 oder 3, wobei der Fluidregler (114) dazu konfiguriert ist, in Fluidverbindung mit einer Druckfluidquelle (116) zu stehen, wobei der Fluidregler (114) dazu konfiguriert ist, ein Druckfluid (118) von der Druckfluidquelle (116) zu der aufblasbaren Manschette (112) zu leiten, um die aufblasbare Manschette (112) selektiv zu positionieren.

5. Antriebssystem (10) nach einem der vorhergehenden Ansprüche, wobei die aufblasbare Manschette (112) an dem Bypassströmungsauslass (68) angeordnet ist.

6. Antriebssystem (10) nach einem der vorhergehenden Ansprüche, wobei das Gasturbinentriebwerk (20) einen Verdichter (38,40) beinhaltet, der den Kernströmungsweg (98) bildet, wobei der Fluidregler (114) in Fluidverbindung mit dem Verdichter (38, 40) steht, wobei der Fluidregler (114) dazu konfiguriert ist, ein Druckfluid (118) von dem Verdichter (38,40) zu empfangen und das Druckfluid (118) zu der aufblasbaren Manschette (112) zu leiten.

7. Antriebssystem (10) nach einem der vorhergehenden Ansprüche, wobei die Anweisungen bei Ausführung durch den Prozessor (102) den Prozessor (102) ferner veranlassen:
den Fluidregler (114) zu steuern, um die aufblasbare Manschette (112) mit einer gewählten Periodizität auf Grundlage des bestimmten Betriebszustands zyklisch zu verstellen.

8. Antriebssystem (10) nach einem der vorhergehenden Ansprüche, wobei die Anweisungen bei Ausführung durch den Prozessor (102) den Prozessor (102) ferner veranlassen:
eine Ansammlung von Fremdkörpern (120) an der aufblasbaren Manschette (112) zu identifizieren und den Fluidregler (114) zu steuern, um die aufblasbare Manschette (112) auf Grundlage der Identifizierung der Fremdkörperansammlung zyklisch zu verstellen.

9. Verfahren zum Steuern einer Luftdurchflussmenge für einen Lufteinlass (36) für ein Luftfahrzeugantriebssystem (10), wobei das Verfahren umfasst:
Bestimmen eines Betriebszustands des Luftfahrzeugantriebssystems (10), wobei der Lufteinlass (36) des Luftfahrzeugantriebssystems (10) einen Kernströmungskanal (56) und einen Bypassströmungskanal (58) beinhaltet; und
Steuern einer ersten Luftdurchflussmenge für den Bypassströmungskanal (58) und einer zweiten Luftdurchflussmenge für den Kernströmungskanal (56) durch Steuern einer Strömungssteuervorrichtung (108), um eine Fläche einer Querschnittsströmungsfläche (110) eines Bypassströmungsdurchgangs (70) des Bypassströmungskanals (58) auf Grundlage des bestimmten Betriebszustands selektiv zu verändern;
wobei die Strömungssteuervorrichtung (108) die Querschnittsströmungsfläche (110) umschließt, und
wobei das Steuern der Strömungssteuervorrichtung (108) ein selektives Positionieren einer aufblasbaren Manschette (112) beinhaltet, die in dem Bypassströmungskanal (58) angeordnet ist,
wobei die aufblasbare Manschette (112) selektiv in einer vollständig aufgeblasenen Position, einer vollständig entleerten Position und einer Mehrzahl von Zwischenaufblaspositionen zwischen der vollständig aufgeblasenen Position und der vollständig entleerten Position positionierbar ist, wobei das selektive Positionieren der aufblasbaren Manschette (112) optional ein Leiten eines Druckfluids (118) zu der aufblasbaren Manschette (112) beinhaltet, um die aufblasbare Manschette (112) aufzublasen;
**dadurch gekennzeichnet, dass** das Verfahren ferner Folgendes umfasst:
Zyklisches Verstellen der aufblasbaren Manschette (112) zwischen einer ersten aufgeblasenen Position und einer zweiten aufgeblasenen Position, um angesammelte Fremdkörper (120) von der aufblasbaren Manschette (112) zu entfernen.

10. Verfahren nach Anspruch 9, wobei:
der bestimmte Betriebszustand ein Reiseflugzustand des Luftfahrzeugantriebssystems (10) ist und das Steuern der Strömungssteuervorrichtung (108) ein selektives Positionieren der aufblasbaren Manschette (112) in einer aufgeblasenen Position auf Grundlage des Reiseflugzustands beinhaltet.

11. Verfahren nach Anspruch 9, wobei:
der bestimmte Betriebszustand ein Vereisungszustand des Luftfahrzeugantriebssystems (10) ist und das Steuern der Strömungssteuervorrichtung (108) ein selektives Positionieren der aufblasbaren Manschette (112) in der vollständig entleerten Position auf Grundlage des Vereisungszustands beinhaltet.

## Revendications

1. Système de propulsion (10) pour un aéronef (1000), le système de propulsion (10) comprenant :
un moteur à turbine à gaz (20) formant un trajet d'écoulement principal (98) ; et
une admission d'air (36), l'admission d'air (36) comprenant :
un conduit d'entrée d'air (54), le conduit d'entrée d'air (54) comportant une entrée d'admission (60) de l'admission d'air (36) ;
un conduit d'écoulement principal (56), le conduit d'écoulement principal (56) comportant une sortie d'écoulement principal (68), le conduit d'écoulement principal (56) s'étendant entre et jusqu'au conduit d'entrée d'air (54) et la sortie d'écoulement principal (68), et le conduit d'écoulement principal (56) étant configuré pour orienter l'air provenant du conduit d'entrée d'air (54) vers le trajet d'écoulement principal (98) à travers la sortie d'écoulement principal (68) ;
un conduit d'écoulement de dérivation (58), le conduit d'écoulement de dérivation (58) comportant une sortie d'écoulement de dérivation (68), le conduit d'écoulement de dérivation (58) s'étendant entre et jusqu'au conduit d'entrée d'air (54) et la sortie d'écoulement de dérivation (68), le conduit d'écoulement de dérivation (58) comportant une surface intérieure (52) formant et entourant un passage d'écoulement de dérivation (70) à travers le conduit d'écoulement de dérivation (58) ; et
un dispositif de commande d'écoulement (108) disposé sur la surface intérieure (52), le dispositif de commande d'écoulement (108) étant configuré pour commander de manière variable une zone d'une section transversale d'écoulement (110) du passage d'écoulement de dérivation (70) ;
dans lequel le dispositif de commande d'écoulement (108) circonscrit la section transversale d'écoulement (110),
dans lequel le dispositif de commande d'écoulement (108) comporte un manchon gonflable (112) et un régulateur de fluide (114), le manchon gonflable (112) étant disposé à l'intérieur du passage d'écoulement de dérivation (70), le régulateur de fluide (114) étant en communication fluidique avec le manchon gonflable (112), le régulateur de fluide (114) étant configuré pour positionner de manière sélective le manchon gonflable (112) dans une position entièrement gonflée, une position entièrement dégonflée et une pluralité de positions de gonflage intermédiaires entre la position entièrement gonflée et la position entièrement dégonflée afin de commander la zone d'une section transversale d'écoulement (110) du passage d'écoulement de dérivation (70), et
dans lequel le système de propulsion (10) comprend en outre un système de commande moteur (24), le système de commande moteur (24) étant en communication de signal avec le régulateur de fluide (114), le système de commande moteur (24) comportant un processeur (102) en communication avec une mémoire non transitoire (104) stockant des instructions, lesquelles instructions, lorsqu'elles sont exécutées par le processeur (102), amènent le processeur (102) à :
déterminer un état de fonctionnement du système de propulsion (10) ; et
commander le régulateur de fluide (114) pour positionner de manière sélective le manchon gonflable (112) pour commander la zone d'une section transversale d'écoulement (110) du passage d'écoulement de dérivation (70) sur la base de l'état de fonctionnement déterminé ;
**caractérisé en ce que** :
les instructions, lorsqu'elles sont exécutées par le processeur (102), amènent en outre le processeur (102) à commander le régulateur de fluide (114) pour faire alterner le manchon gonflable (112) entre une première position gonflée et une seconde position gonflée afin d'éliminer des corps étrangers (120) accumulés du manchon gonflable (112).

2. Système de propulsion (10) selon la revendication 1, dans lequel le manchon gonflable (112) est disposé sur la surface intérieure (52).

3. Système de propulsion (10) selon la revendication 1 ou la revendication 2, dans lequel une première zone de la section transversale d'écoulement (110) avec le manchon gonflable (112) dans la position entièrement gonflée est inférieure à cinq pour cent d'une seconde zone de la section transversale d'écoulement (110) avec le manchon gonflable (112) dans la position entièrement dégonflée.

4. Système de propulsion (10) selon la revendication 1, 2 ou 3, dans lequel le régulateur de fluide (114) est configuré pour être en communication fluidique avec une source de fluide sous pression (116), le régulateur de fluide (114) étant configuré pour orienter un fluide sous pression (118) de la source de fluide sous pression (116) vers le manchon gonflable (112) afin de positionner de manière sélective le manchon gonflable (112).

5. Système de propulsion (10) selon une quelconque revendication précédente, dans lequel le manchon gonflable (112) est disposé au niveau de la sortie d'écoulement de dérivation (68).

6. Système de propulsion (10) selon une quelconque revendication précédente, dans lequel le moteur à turbine à gaz (20) comporte un compresseur (38, 40) formant le trajet d'écoulement principal (98), le régulateur de fluide (114) étant en communication fluidique avec le compresseur (38, 40), le régulateur de fluide (114) étant configuré pour recevoir un fluide sous pression (118) du compresseur (38, 40) et orienter le fluide sous pression (118) vers le manchon gonflable (112).

7. Système de propulsion (10) selon une quelconque revendication précédente, dans lequel les instructions, lorsqu'elles sont exécutées par le processeur (102), amènent en outre le processeur (102) à :
commander le régulateur de fluide (114) pour faire alterner le manchon gonflable (112) selon une périodicité sélectionnée sur la base de l'état de fonctionnement déterminé.

8. Système de propulsion (10) selon une quelconque revendication précédente, dans lequel les instructions, lorsqu'elles sont exécutées par le processeur (102), amènent en outre le processeur (102) à :
identifier l'accumulation de corps étrangers (120) sur le manchon gonflable (112), et commander le régulateur de fluide (114) pour faire alterner le manchon gonflable (112) sur la base de l'identification de l'accumulation de corps étrangers.

9. Procédé de commande d'un débit d'air pour une admission d'air (36) pour un système de propulsion d'aéronef (10), le procédé comprenant :
la détermination d'un état de fonctionnement du système de propulsion d'aéronef (10), l'admission d'air (36) du système de propulsion d'aéronef (10) comportant un conduit d'écoulement principal (56) et un conduit d'écoulement de dérivation (58) ; et
la commande d'un premier débit d'air pour le conduit d'écoulement de dérivation (58) et d'un second débit d'air pour le conduit d'écoulement principal (56) en commandant un dispositif de commande d'écoulement (108) pour faire varier de manière sélective une zone d'une section transversale d'écoulement (110) d'un passage d'écoulement de dérivation (70) du conduit d'écoulement de dérivation (58) sur la base de l'état de fonctionnement déterminé ;
dans lequel le dispositif de commande d'écoulement (108) circonscrit la section transversale d'écoulement (110), et
dans lequel la commande du dispositif de commande d'écoulement (108) comporte le positionnement de manière sélective d'un manchon gonflable (112) disposé dans le conduit d'écoulement de dérivation (58), le manchon gonflable (112) pouvant être positionné de manière sélective dans une position entièrement gonflée, une position entièrement dégonflée et une pluralité de positions de gonflage intermédiaires entre la position entièrement gonflée et la position entièrement dégonflée, dans lequel, éventuellement, le positionnement de manière sélective du manchon gonflable (112) comporte l'orientation d'un fluide sous pression (118) vers le manchon gonflable (112) afin de gonfler le manchon gonflable (112) ;
**caractérisé en ce que** le procédé comprend en outre :
l'alternance du manchon gonflable (112) entre une première position gonflée et une seconde position gonflée pour éliminer des corps étrangers (120) accumulés du manchon gonflable (112).

10. Procédé selon la revendication 9, dans lequel :
l'état de fonctionnement déterminé est une condition de croisière du système de propulsion d'aéronef (10) et la commande du dispositif de commande d'écoulement (108) comporte le positionnement de manière sélective du manchon gonflable (112) dans une position gonflée sur la base de la condition de croisière.

11. Procédé selon la revendication 9, dans lequel :
l'état de fonctionnement déterminé est une condition de givrage du système de propulsion d'aéronef (10) et la commande du dispositif de commande d'écoulement (108) comporte le positionnement de manière sélective du manchon gonflable (112) dans la position entièrement dégonflée sur la base de la condition de givrage.
